# EUROPEAN PATENT APPLICATION

(11) **EP 1 632 333 A2**
(43) Date of publication of application: **08.03.2006**
(21) Application number: 05019048.7
(22) Date of filing: 01.09.2005
(51) Int. Cl.: B29C 49/58, B29C 49/76, B29C 49/04

(54) **Method and apparatus for making blown containers with round neck openings**

(30) Priority: 01.09.2004 US 606225 P; 31.08.2005 US
(71) Applicant: Ultraseal Technologies Corporation, Spokane WA 99201 (US)
(72) Inventor: Wohlgemuth, Emanuel, E., Cocoa Beach Fl 32931-3341 (US); Hogan, Charles, Spokane Wa 99207 (US); Cobiski, Richard, J., Chariton MA 01507 (US)
(74) Representative: LOUIS, PÖHLAU, LOHRENTZ

(57) **Abstract**

An assembly and method are provided for inflating a parison within a mold (100) and forming the neck portion of a plastic container in a blow molding apparatus. The assembly includes a blow pin assembly (10) mounted to a blow rod (12). The blow pin assembly (10) includes an exterior surface having an annular cutting edge (20). The blow rod (12) is movable along a vertical axis. The blow pin assembly (10) is constructed such that at the time the mold is opened, the bottom end thereof is substantially incapable of engaging the lip of the blown container even if it is released unevenly from the mold (100). This is preferably accomplished by providing a blow pin assembly (10) having a bottom end that is either above the shear steels at the time the mold is opened to release the container or has a sufficiently small diameter that it will not engage the container lip.

## Description

### BACKGROUND OF THE INVENTION

### Field of the Invention

The field of the invention relates to a method and apparatus for inflating parisons and forming the necks of plastic containers manufactured by blow molding machinery.

### Brief Discussion of the Prior Art

The blow molding of plastic containers is well known and practiced worldwide. Blow molding offers many advantages over other forms of container manufacturing.

These advantages include the ability to produce containers at minimal cost and with minimal waste; the low start-up costs and mold making lead times in comparison to other manufacturing methods, such as injection molding; the ability to produce irregular shaped and hollow containers; the ability to produce containers quickly and automatically; the ability to produce containers from a variety of materials having qualities suited to the specific application.

Blown containers having specially formed neck finishes are commonly employed for use with container closures. Neck finishes may be threaded for use with threaded closures, adapted for mating with snap-on closures, etc. It is common within a container blow mold system to employ a main mold to form the container reservoir, and a neck block, or top block, to form the neck finish. Top blocks are also made to standard dimensions so that the parting face of the top block and main mold properly match. The main mold is usually adapted to interchangeably accept any standard top block for a particular container size or style.

The first pair of components mounted to the top block are the neck finish blocks. Each neck finish block is usually made of aluminum, and may originally be formed as a circular body. The circular body is cut in half to form the neck finish block for each half of the mold. The neck finish blocks are machined to provide threads, ratchet teeth, shoulders or other surface features on the container which are used to engage or otherwise accommodate a closure.

During blow molding, a parison of molten plastic is extruded between the open mold halves, then the mold system closes to entrap the parison within the mold cavity. A hollow blow pin, which is ordinarily made of tool steel, is inserted through the neck opening, and into the parison where it inflates the parison with pressurized air to cause the parison to form to the shape of the container and neck finish cavity. The blow pin includes a hardened steel bushing, or shear bushing, having an annular blade, and each top block half includes a semi-circular hardened steel blade, or shear steel.

The shear steel shapes and trims flash from the top end of the bottle neck. By providing various degrees of precision ground undercut to the bottom surfaces of the shear steels, a distinct radius can be formed at the upper edge of the bottle neck area. This can improve the strength of the bottle neck in this critical area. Shear steels are made of precision ground and hardened steel.

When the mold is closed, the semi-circular blades and seals form annular orifices around the shear bushing. During molding, portions of the parison extending beyond the mold cavity are trapped between the parting faces of the mold halves and become unwanted flash. After the container is formed within the cavity and before the mold system reopens to release the blow molded container, the shear bushing is retracted upwardly through the shear steel orifice. The shear bushing and shear steels are sized and shaped so that the retraction causes a shearing of the container opening through the neck, whose diameter is that of the shear bushing blade and shear steel orifice. After the molded container is removed from the mold, flash is removed by trimming in an automated process.

The last set of components which are mounted to the top block are the master seals, which are sometimes referred to as masters. These components provide a seal for the blow pin, thereby preventing air from escaping from the mold when the parison is inflated to form the container. They also form a "flash pocket" which pinches and seals the parison when the molds close at the start of the production cycle. When all neck finish components, i.e. the neck finish block, the shear steel and the master seal, have been mounted to the top block halves, they are then secured thereto with four Allen cap screws or the like. Failure to do so can prevent the mold from closing properly, leading to damage or even destruction of the neck finish components and/or blow pin. U.S. Patent No. 5,589,204, the disclosure of which is incorporated by reference herein, discloses a mold assembly including a top block assembly which facilitates alignment of the neck finish components with the mold parting line.

The slightest misalignment of the blow pin assembly within the mold will impose undue wear upon the blow pin assembly shearing edge and/or the shear steel as they cooperate to shear the container, thereby causing frequent replacement and sharpening. Such wear occurring at the blow pin assembly shear edge and/or the shear steel is a primary reason for blow molding process down-time and maintenance. It is important that effective and clean shearing of the container neck occur as the blow pin assembly is withdrawn from the mold cavity. U.S. Patent No. 6,824,732 discloses an effective way of centering a blow pin assembly.

An important objective in the manufacture of plastic bottles is to provide a neck opening that is as round as possible. Openings that are not round do not seal well as the valve members of the caps applied to the openings are round, as are the caps themselves.

### SUMMARY OF THE INVENTION

It is an object of the invention to provide a mold assembly that effectively ensures the formation of a round neck opening that can be reliably sealed by a cap. A method for forming a round neck opening under most operating conditions is further provided. A method and apparatus are further provided for ensuring that a container lip is properly formed during the molding process.

In accordance with the above objects of the invention, an assembly for inflating a parison and forming a plastic container is provided. The assembly includes a blow rod and a blow pin assembly. These and other elements form the body and neck portion of a plastic container in a blow molding apparatus. The blow pin assembly is mounted to the blow rod. It includes a blow pin body including an exterior surface having an annular cutting edge. The blow rod and attached blow pin assembly are moveable up and down. Shear steels are positioned to interact with the cutting edge of the blow pin as it moves upwardly. The blow pin assembly is constructed such that it is substantially incapable of engaging the lip of the blown container as the mold is opened, even if the container does not separate evenly from the mold. This is preferably accomplished by the use of a blow pin assembly that does not extend below the shear steels when the blow rod is in a raised position following severing of the plastic about the neck area of the container. As the container lip is formed just beneath the shear steels, this ensures that the lip cannot engage any portion of the blow pin assembly as the mold is opened, even if the container is angled or cocked. Alternatively, any portion of the blow pin assembly that may extend below the bottom surfaces of the shear steels when the mold is opened can be manufactured with a small enough diameter that it will not engage the container lip as the container is released from the mold.

In a preferred embodiment, the blow pin assembly includes a heat sink for removing heat from the blow pin body. As described in U.S. Patent No. 5,795,598, the heat sink is preferably positioned within an internal cavity of the blow pin body and includes a plurality of flow passages therein to facilitate air flow and/or heat dissipation. The heat sink is dimensioned such that it too does not extend below the shear steels when the mold is opened. Alternatively, any part of the heat sink that does extend beneath the shear steels at this time can have a small diameter that is substantially smaller than that of the annular cutting edge. It accordingly will not engage the container lip when the container is released from the mold. Preferably, the blow pin body is made from a durable material, such as tool steel, and the heat sink is made from a material having high heat transfer properties, such as aluminum. The use of a heat sink, while preferred, is not required.

In order to force plastic to the sealing lip area of a molded bottle, the blow pin body is preferably provided with upper and lower portions and a groove or recess between these portions. A plurality of air passages extend through the groove or recess. These passages are angled upwardly so that the plastic material under the shear steels is effectively cooled.

A method of forming a blown plastic container is further provided. The method includes the steps of inflating a parison within a mold, and moving the blow pin assembly with respect to the shear steels such that flash is trimmed from the upper end of the container. The lower end of the blow pin assembly may be positioned substantially level with or above the shear steels at the time of opening the mold to release the blown container. Alternatively, the blow pin assembly is provided with a lower end having a diameter that is substantially smaller than that of the annular cutting edge. Upon opening the mold, the only part of the blow pin assembly extending below the bottom surfaces of the shear steels has a small diameter. Contact between the blow pin assembly and container lip is thereby avoided.

An assembly for reducing or eliminating imperfections in the sealing surface of a container neck is also provided. This assembly preferably includes a flexible disc having an annular edge that is slightly larger in diameter than the diameter of the annular cutting edge of a blow pin that is used in association with the disc.

### BRIEF DESCRIPTION OF THE DRAWINGS

FIG. 1 is a cross-sectional view of a blow mold for use with the blow pin assembly of the present invention;
FIG. 2 is a side elevation view of the blow pin and blow rod of the present invention in a raised position to effect trimming;
FIG. 3 is a sectional view of a blow pin body in accordance with the invention;
FIG. 4 is an enlarged view of a portion of FIG. 2, wherein the blow pin of the present invention is in the down position;
FIG. 5 is an enlarged view of a portion of FIG. 2, wherein the blow pin of the present invention is in the up position and the trimming of flash occurs;
FIG. 6 is an enlarged view of a portion of FIG. 2, showing the blow pin raised to a position at or above the shear steels at the time the mold is opened;
FIG. 7 is an exploded, perspective view of a blow pin assembly in accordance with a preferred embodiment of the invention;
FIG. 8 is a sectional side elevation view of a preferred embodiment of the blow pin shown in Figure 7;
FIG. 9 is an enlarged elevation view of part of the top portion of the blow pin shown in Figure 8;
FIG. 10 is a side elevation view of an aluminum liner that may be employed with a blow pin;
FIG. 11 is an end view thereof;
FIG.12 is a sectional view of the heat sink designed for use in association with the blow pin shown in Figures 7 and 8;
FIG. 13 is a side elevation view of a blow pin in accordance with a further embodiment of the invention; and
FIG. 14 is a sectional view of a blow pin assembly including a secondary surface imperfection eliminator.

### DETAILED DESCRIPTION OF THE INVENTION

The present invention is described below as used in conjunction with the blow molding of a container having a threaded finish. This disclosure is in no way intended to limit the invention to use with only thread finish containers, and the modification of the invention for use with other blown containers will be readily apparent to one skilled in the art given the following detailed description.

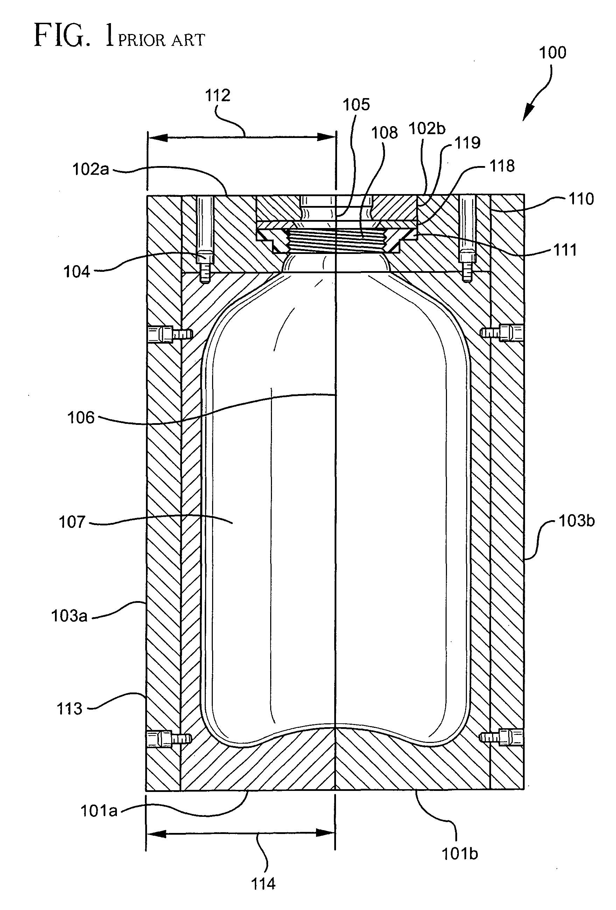

Referring now to the drawings, FIG. 1 shows a typical mold system, designated by reference numeral 100. The mold system 100 is comprised of two main mold halves 101A and 101B, two top block halves 102A and 102B, and two back plates 103A and 103B. One main mold half 101A is affixed to the back plate 103A which in turn is mounted within an extrusion blow-molding machine. The top block half 102A is affixed atop one of the main mold halves 101A by machine bolts 104 through screw-holes 117 such that the top block parting face 105 is aligned with the main mold parting face 106. The opposing main mold and top block halves are similarly assembled, with further attention that the matching mold halves and top blocks mate properly to each other. A reservoir cavity 107 is formed by the mating of the mold halves such that a container may be formed therein. Such machinery is in widespread use today for manufacturing plastic containers filled with milk, juice, water, etc. U.S. Patent No. 4,234,299, which is incorporated herein by reference, contains a discussion of blow molding machinery of this type.

The container formed by the mold of FIG. 1 includes a reservoir portion and a neck portion. The neck portion includes helical threading. The mating top block halves form a thread cavity 108 for forming the container neck threading therein. Each top block half comprises base portion 110 to which a neck finish insert 111, a shear steel 118, and a master seal 119 are mounted. The neck finish inserts, shear steels and master seals are removable from the top block halves for interchangeability and replacement.

After assembly and alignment, the top block parting face 105 must be precisely aligned with the main mold parting face 106 to ensure proper molding and minimal mold wear. In order to accomplish this, the top plate depth 112, measured from back mounting surface 113 of the back plate 103A to top block parting face 105, must be equal to the main mold depth 114, equivalently measured. Further, the parting faces must each be held parallel to the back plate.

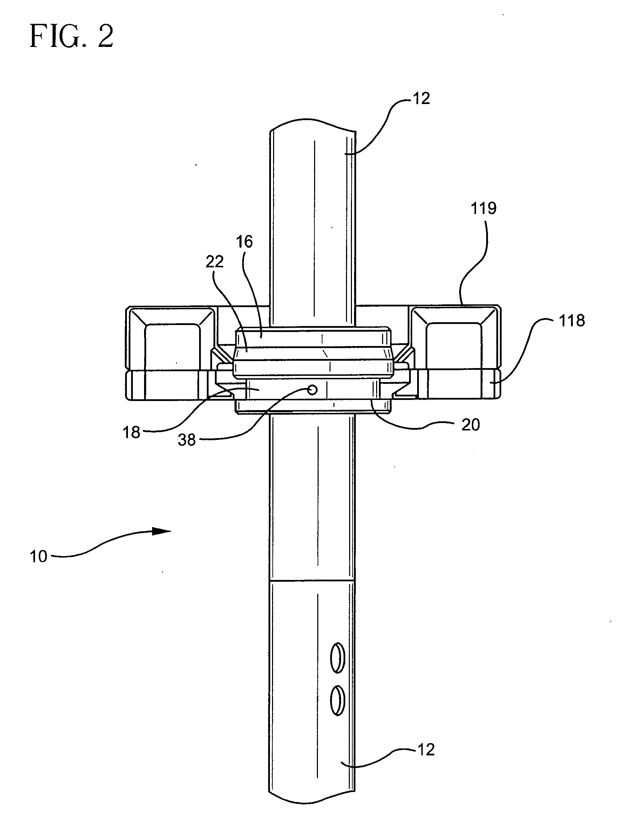

FIG. 2 shows a blow pin assembly 10 positioned within one half of the master seal 119 and one half of the shear steel 118. The blow pin assembly 10 in accordance with this preferred embodiment of the invention is adapted for mounting to a blow rod 12. It and the blow rod 12 together form an assembly for inflating a parison (not shown).

The blow pin assembly 10 is comprised in part of a blow pin body 14. The exterior surface of the blow pin body is divided into two operative sections, an upper portion 16 and a lower portion 17. The blow pin assembly 10 includes a heat sink (not shown) for removing heat from the blow pin. The heat sink is positioned within an internal cavity of the blow pin body and includes a plurality of flow passages therein to facilitate heat dissipation. The blow pin body 14 is made from a durable material, such as tool steel. The heat sink is made from a material having high heat transfer properties, such as aluminum. U.S. Patent No. 5,795,598 discloses a heat sink of the type that could be employed, though size modification would be required due to the substantial differences in length between the blow pin body disclosed in the patent and the blow pin body 14 as described herein. As discussed below, neither the heat sink nor the blow pin body should extend below the shear steels at the time the mold is opened. The dimensions of any heat sink that may be employed are such that it remains above the shear steels at mold opening. Alternatively, as described below, the heat sink may extend well below the shear steels provided its outside diameter is substantially less than the inside diameter of the container lip.

The upper portion 16 and the lower portion 17 of the blow pin body 14 are divided by a groove or recess 18. The upper portion 16 and the lower portion 17 may be separate pieces which are assembled together, or preferably are integrally molded as a single article. A shearing member in the form of an annular cutting edge 20 is defined by the exterior surface of the lower portion 17 of the blow pin body. While the shearing member is preferably integral with the blow pin body, it may be formed as a separable member.

During the blow molding operation, a parison is formed around the blow pin assembly 10 and blow rod 12 and extends into the reservoir cavity 107. The parison, the blow pin assembly and the blow rod are placed between the two mold halves 101A and 101B. The blow pin assembly is moveably positioned between an up and a down position within a first passage defined by the inner surfaces of the opposing set of master seals 119 and a second passage defined by the inner surfaces of the opposing pairs of shear steels 118. The diameter of the cutting edge 20 is sized so as to approximate the inner diameter of the second passage.

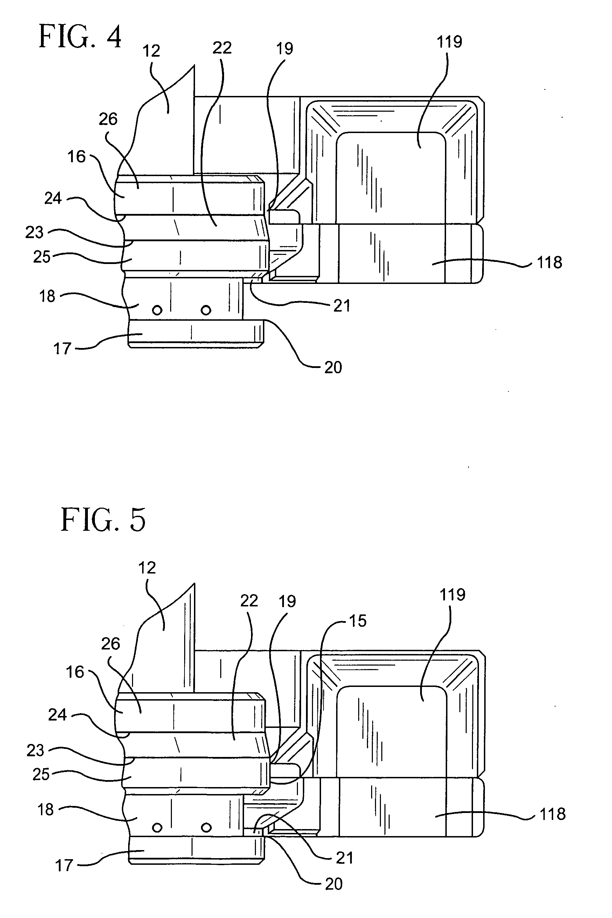

When the blow pin assembly 10 is in the down position, as shown in FIG. 4, the exterior surface of upper portion 16 of the blow pin body, and the inner surface 19 of the master seal 119, entrap the plastic above the neck portion of the parison therebetween to form a seal. With the seal in place, the parison is then inflated into the desired container shape by the injection of air through the blow rod 12. The shear steels 118 and neck finish insert 111 are constructed such that a container lip is formed just beneath the shear steels.

After the container is fully formed, the blow pin assembly 10 is moved into the position shown in FIG. 5. The movement of the blow pin assembly 10 into the up position causes the cutting edge 20 of the lower portion 17 of the blow pin body to cooperate with the inner surface of the shear steel 118 to sever the container at the neck. This severing forms the area on the neck upon which a subsequently applied closure effects a seal, and also allows the container to be removed from the mold. As stated above, if the blow pin assembly 10 is misaligned within the mold, the step of severing the container at the neck will not be effectively accomplished, and typically results in the premature wear of the cutting edge 20 of the blow pin body and the inner surface of the shear steel 118. Therefore, in order to properly align the cutting edge 20 and the inner surface of the shear steel 118, the upper portion 16 of the blow pin body is provided with a guide.

As can be seen clearly in FIGS. 4 and 5, the guide is formed by providing the exterior surface of the upper portion 16 of the blow pin body with a tapered portion 22. The tapered portion 22 is located above the cutting edge 20 on the exterior surface of the blow pin body 14. The tapered portion 22 is angled so as to increase in diameter in the direction of the cutting edge 20, thereby forming a substantially conical section. The angle of taper of the tapered portion 22 as measured from the largest diameter edge 23 to the smallest diameter edge 24 is preferably about five degrees.

As seen in FIGS. 4-5, the tapered portion 22 enables a misaligned blow pin assembly 10 to automatically center itself during its movement into the up position before the cutting edge 20 engages the inner surface 21 of the shear steels 118. As the blow pin assembly 10 is moved from the down position into the up position, the tapered portion 22 contacts the inner surfaces 19 of the master seals 119. As the blow pin 10 is moved toward the up position, the contact between the tapered portion 22 and the inner surface 19 of the master seal 119 will move the blow pin 10 to the center of the mold thereby aligning the cutting edge 20 and the inner surface 21 of the shear steels 118. This automatic centering enables efficient severing of the container at the neck without the need for the shear steels 118 or the cutting edge 20 to first contact each other and cause premature wear.

The largest diameter edge 23 of the tapered portion 22 is bound by a substantially cylindrical portion 25 having a diameter which is substantially equal to that of the largest diameter edge 23 of the tapered portion 22. The cylindrical portion 25 is sized so as to be slightly smaller than the inner diameter of the first passage defined by the inner surface 19 of the master seals 119. This slightly smaller diameter enables the blow pin assembly 10 to move freely between the up and the down positions. In addition, the cylindrical portion 25 is positioned and sized in relation to the cutting edge 20 so that, when the cylindrical portion 25 is located between the master seals 119, the blow pin assembly 10 is centered relative to the mold, and the cutting edge 20 is aligned with the inner surface 21 of the shear steels 118. Further, it will be evident that, in order to provide proper alignment before severing, the length of the tapered portion 22 is such that the master seals 119 engage the cylindrical portion 25 before the cutting edge 20 engages the inner surfaces 21 of the shear steels 118 to sever the container at the neck.

In the preferred embodiment, the tapered portion 22 is bound on either end by a substantially cylindrical portion. In other words, the largest diameter edge 23 of the tapered portion 22 is bound by the first substantially cylindrical portion 25 having a diameter substantially equal to that of the largest diameter edge 23 of the tapered portion 22, and the smallest diameter edge 24 of the tapered portion 22 is bound by a substantially cylindrical portion 26 having a diameter substantially equal to that of the smallest diameter edge 24 of the tapered portion 22.

The use of the tapered portion 22 on the upper portion 16 of the blow pin assembly 10 results in an advantageous apparatus which automatically aligns the cutting edge 20 of the blow pin 10 with the shear steels 118 of the mold. Additionally, the use of the tapered portion provides for decreased wear on the blow pin because the cutting edge and the shear steels do not need to contact each other for a proper alignment before severing. These factors, among others, lead to the decreased maintenance of a blow pin, and the resultant decrease in blow molding machinery down-time. They further allow the cutting edge 20 to be optimally configured for effectively trimming the plastic and to be easily reconditioned as wear occurs.

A plurality of air passages 38, preferably eight in number and equally spaced, extend through the blow pin body 14 in the area of the recess 18. These air passages are in fluid communication with the blow rod 12 and help force plastic to the sealing lip area of the container during the molding process. They are located near the bottom of the recess 18 and are angled upwardly. Air exiting the passages accordingly cools the plastic under the shear steels 118. The number and/or size of the air passages 38 is determined in part by the number and size openings provided elsewhere in the particular blow rod for inflating the parison. Sufficient air flows are provided to properly form the container and handle in the reservoir 107 as well as the container neck.

The mold is opened to release the container once the flash has been trimmed from the top end of the bottle neck by movement of the cutting edge 20 of the blow pin past the shearing edges of the shear steels 118. If the container has been properly formed and is readily released upon opening of the mold, the top of the container, including the lip, will be round. This allows an effective seal to be formed when a cap is applied to the neck of the container and the valve member of the cap enters the neck of the container. Containers do not, however, always release properly from the molds. This problem may be due to imperfections in the containers. The containers may, as a result, tend to stick to one of the mold halves after the mold is opened. Rather than dropping straight down, the containers become cocked to one side or the other before finally releasing. Because the lip is still rather soft at the time the mold opens, it can lift or otherwise become distorted or "ovalized" if it engages a hard object at or shortly after opening of the mold. It has been found that the blow pin is responsible for lifting container lips and/or causing "out-of-round" or ovalized openings under such circumstances as the bottom or "skirt" portion of the blow pin extends well into the neck of the newly formed container. Prior art blow pins have skirts that extend a half inch or more below the shear steels and into the container neck at the time of mold opening. The problem described above can be largely if not entirely eliminated in accordance with the invention by providing a blow pin that will not engage the lip at the top of the container once the mold is opened, even if the container tends to stick to one mold half or the other before releasing.

In accordance with the preferred embodiment disclosed herein, a substantially shorter blow pin is employed for a given application than has been used in the past. Once the blow pin has completed its upward stroke, thereby severing the container at the neck, the lower end of the blow pin is no longer capable of engaging the lip that has been formed just below the shear steels, even if the container is released unevenly from the mold. A preferred way of ensuring further contact between the blow pin and lip cannot occur at the time the mold opens is to cause the bottom end of the blow pin to be positioned substantially at or above the bottoms of the shear steels at this time. As discussed above, the container lip is formed just below the shear steels and accordingly could not contact a blow pin so positioned even if the container was pulled towards one of the mold halves following opening of the mold. While the blow rod 12 may extend well below the shear steels, its diameter is relatively small and would be highly unlikely to engage the container lips even under conditions where the containers tend to stick to one of the mold halves. The bottom end of the blow pin is preferably provided with a 45° chamfer to avoid possible damage to the shear steels on the downward stroke.

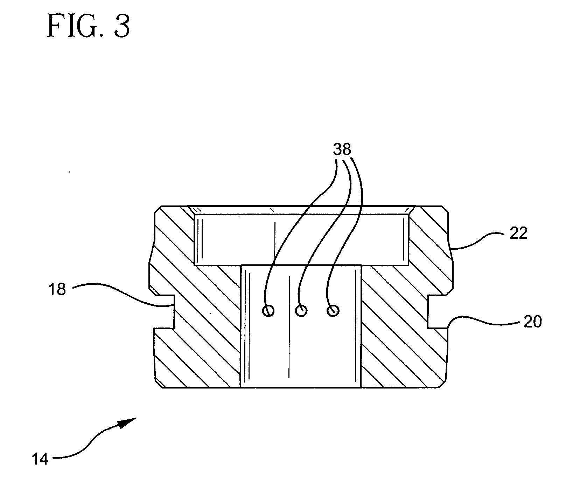

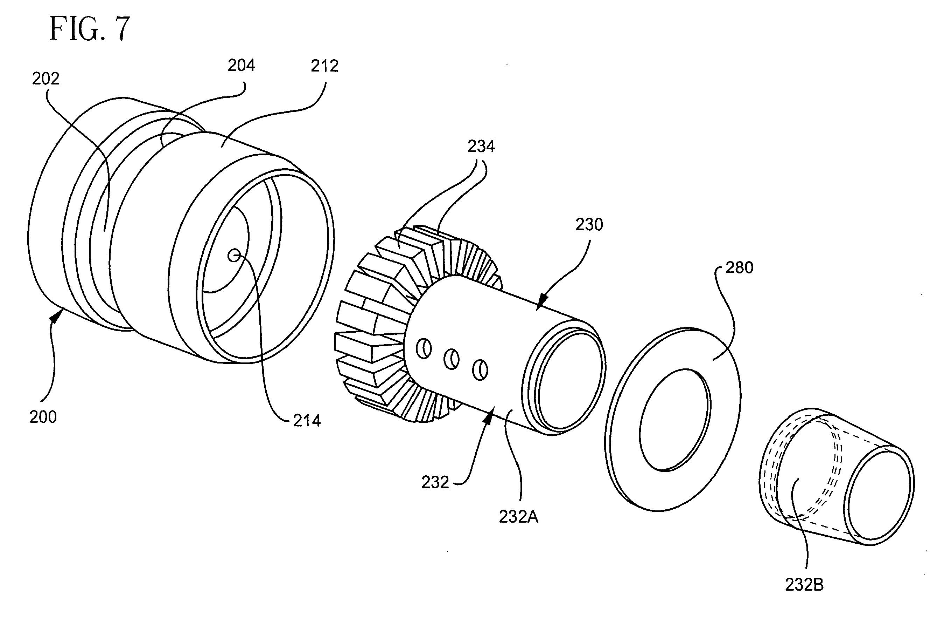

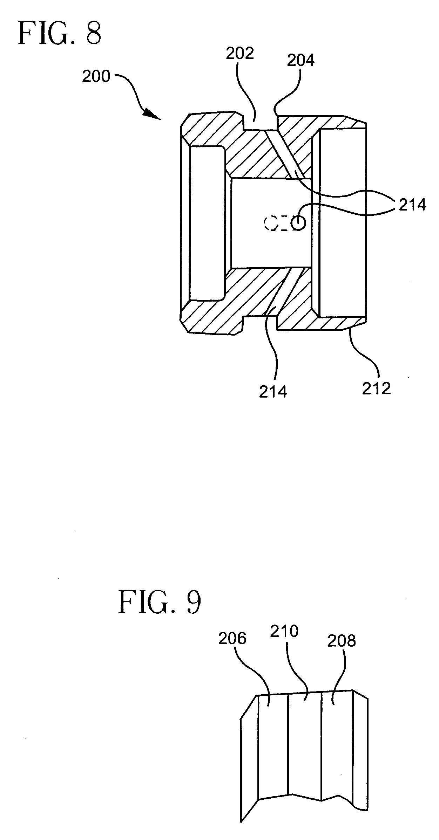

Referring to Figures 7 and 8, a preferred embodiment of a blow pin assembly including a blow pin 200 and a heat sink 230 is shown. This blow pin is similar to that shown in Figures 3-6, and is used in substantially the same way. The body of the blow pin includes an upper portion and a lower portion that are divided by an annular groove or recess 202. A shearing member in the form of an annular cutting edge 204 is defined by the exterior surface of the lower portion of the blow pin body. Like the embodiment of Figures 3-6, the shearing member is preferably integral with the blow pin body, though it may be formed as a separable member. The top edge of the blow pin body is chamfered at about a thirty degree angle, as best shown in Figure 9. The remainder of the upper portion of the blow pin body is comprised of two substantially cylindrical portions 206, 208 that are joined by a tapered portion 210 extending therebetween. The upper cylindrical portion 206 is slightly smaller in diameter than the lower cylindrical portion 208. The angle of taper of the tapered portion is preferably about 5 degrees. As discussed above with respect to Figures 4-5, the tapered portion enables a misaligned blow pin assembly to automatically center itself during movement into the up position by contacting the inner surfaces of the master seals. The edge of the lower cylindrical portion adjoining the recess is preferably chamfered at about a 20 degree angle. The overall length of the blow pin is slightly more than an inch.

The blow pin 200 includes a passage extending therethrough having an upper portion with a relatively large diameter, a middle portion of smaller diameter and a lower portion with a relatively large diameter. The lower portion of the passage is bounded by the inner surface of a skirt 212. Four air passages 214 are provided in the blow pin body, each extending at a about a 60 degree angle as measured from the cylindrical outer surface portions of the blow pin. The upper end of each passage adjoins the bottom of the recess. It will appreciated that a different number of passages could be employed. The diameters of the passages are preferably equal and may be about 0.06 inches where four passages are employed.

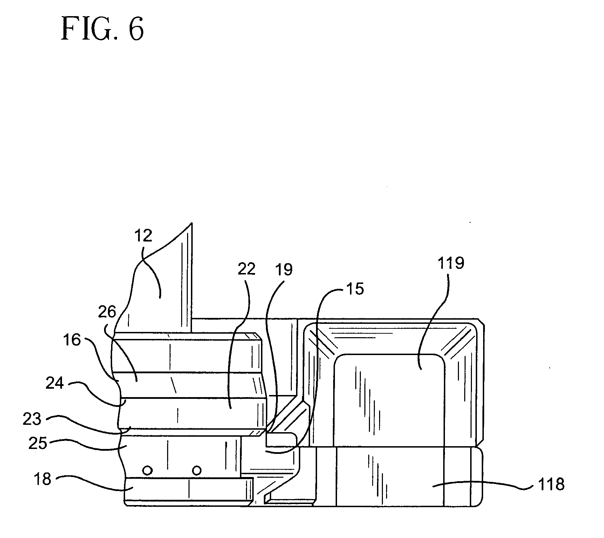

The lower portion or skirt 212 of the blow pin body has a slight inward taper of about 2.33 degrees. Its outer diameter is slightly larger at its upper end than at its lower end. The bottom edge of the skirt is chamfered at an angle of about fifteen degrees. When mounted to a blow rod 12, the skirt 212 extends no lower than substantially level with the bottom surface of the shear steels when the mold is opened, which is the level at which the container lip is formed. In other words, when the blow rod is in the raised position shown in Figure 6, the skirt 212 should extend no more than a very small distance beyond the shear steels and into the neck of the newly formed container, and preferably does not extend beyond the sheer steels at all.

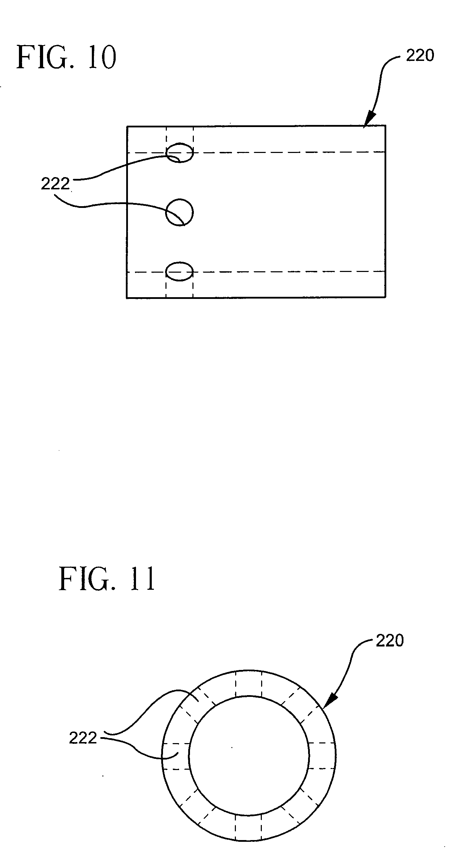

A heat sink is preferably employed in conjunction with the blow pin shown in Figure 7. It is, of course, important that contact between the container lip and the heat sink is avoided upon opening of the mold. This can be accomplished in a couple of different ways. Referring first to Figures 10 and 11, the heat sink 220 may be in the form of a substantially cylindrical aluminum sleeve having an inner diameter corresponding to that of the blow rod and an outer diameter only slightly larger than that of the blow rod. In a preferred embodiment, the inner diameter of the sleeve is about 0.5 inches while the outer diameter is about 0.7 inches. The blow pin is mounted over the sleeve such that its inner surface engages the outer surface of the sleeve. Openings 222 are provided in the sleeve and are aligned with the air passages in the blow pin. Air can accordingly pass through the sleeve and blow pin body to the recessed area of the blow pin. Because the outer diameter of the sleeve is so much smaller than the diameter of the annular cutting edge 104 and container lip, it can extend well beyond the bottom end of the blow pin and the sheer steals without interfering with the container lip upon opening the mold.

An alternative embodiment of a heat sink 230 may be used with the blow pin shown as shown in Figure 7 and Figure 8. This heat sink, when mounted to the blow pin, does not interfere with the newly formed lip of a plastic container.

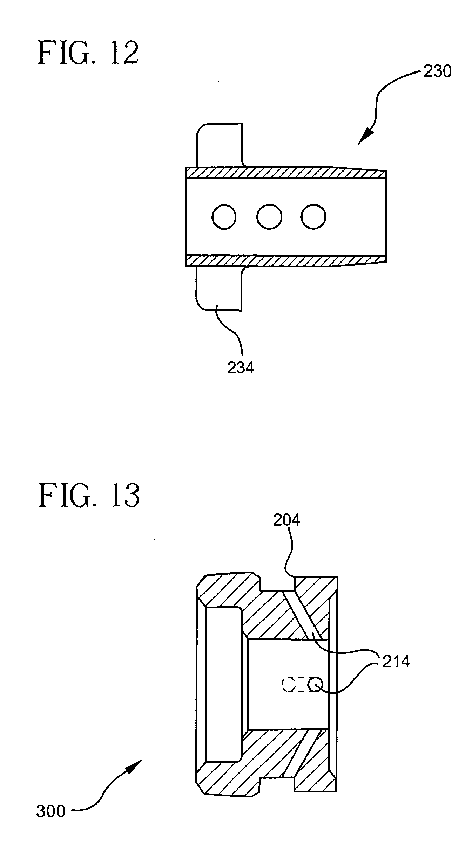

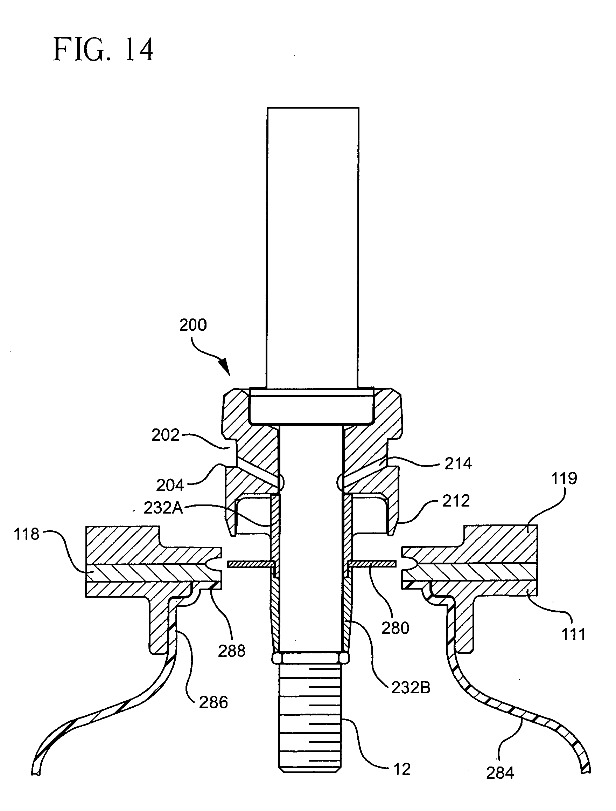

The heat sink 230 includes a cylindrical body 232 having an inner diameter corresponding to that of the blow rod to which it is mounted during use. The upper end portion of the heat sink has a relatively large diameter portion 234 corresponding to the inner diameter of the skirt 212 of the blow pin 200. The heat sink 230 is mounted to the blow pin 200 such that the large diameter portion 234 engages the inner wall of the skirt 212. The large diameter portion of the heat sink includes an array of radially extending fins to enhance cooling. While the large diameter portion 234 of the heat sink 230 is preferably level with the bottom surface of the shear steels or above the bottom surfaces of the shear steels when the mold is opened, the smaller diameter bottom end of the heat sink may extend below the bottom surfaces of the shear steels at this time as it will not contact the container lip as the container is released from the mold. The heat sink 230 shown in Figure 12 is of integral conjunction, but could be made of separate parts as shown in Figures 7 and 14.

Figure 13 shows a blow pin 300 according to another embodiment of the invention that is similar in many respects to that shown in Figure 7. The same reference numerals are employed to designate similar parts of this blow pin. The blow pin shown in Figure 13 includes substantially no skirt portion and is accordingly shorter than the blow pin shown in Figure 7. The bottom end of this blow pin 300 will accordingly be well above the bottom surfaces of the shear steel when the blow rod is fully raised and the mold is opened. The blow pins shown in either Figure 7 or Figure 13 are suitable for use in the production of containers of about a half a gallon or more in size. The blow pin of Figure 7 is preferred for the manufacture of smaller containers. An aluminum sleeve as shown in Figure 10 is preferably employed in conjunction with the blow pin 300.

It will be appreciated that the present invention could be employed in connection with blow pin assemblies that do not include heat sinks as described above. Such blow pin assemblies may, for example, be made substantially or entirely of tool steel. It will further be appreciated that the bottom end of the blow pin, if substantially reduced in outside diameter so that it does not substantially exceed the outside diameter of the blow rod 12, could extend below the shear steels when the mold is opened without tending to engage the container lip. While such a solution would likely be advantageous compared to prior art blow pins in addressing lip lifting and/or ovalization problems, a blow pin having no portion extending below the shear steels when the mold is opened is preferred.

Figure 14 shows a portion of a molding assembly including the blow pin assembly as shown in Figure 7. The blow pin assembly includes a flexible element 280 which shall also be referred to as a secondary sealing surface imperfection eliminator. This disc-like element generally resembles a washer, and is preferably made from stainless steel. The element is preferably about 0.010 inches in thickness and has an outer diameter approximating and preferably slightly greater than the diameter of the annular cutting edge 204 of the blow pin 200. In a preferred embodiment, the outer diameter of the flexible element is about 0.002 inches larger than the diameter of the cutting edge 204.

The heat sink shown in Figures 7 and 14 is substantially the same as that shown in Figure 12 except that it is comprised of more than one part to accommodate the annular flexible element 280. The generally cylindrical body portion 232 includes a lip 282 at the bottom end of its upper part 232A. The outer diameter of the lip 282 corresponds to the inner diameter of the flexible element 280. The inner diameter of the upper end of the lower part 232B of the generally cylindrical body portion 232 also corresponds to the outer diameter of the lip 282 so that the two parts can be joined with the flexible element 280 held therebetween, as shown in Figure 14.

In operation, the blow rod 12 is raised such that the annular cutting edge 204 of the blow pin 200 passes between the shear steels 118, thereby severing the container 284 at the neck. The blow rod continues to move upwardly such that the flexible element 280 passes through the neck 286 of the container, scraping and cleaning it of excess residue that may be present. Imperfections in the sealing portion of the container neck can thereby be reduced or eliminated. The flexible element 280 may be deflected slightly downwardly by the container lip 288 as it moves therethrough. The blow rod 12 is raised until the flexible element is above the bottom surfaces of the shear steels. The relatively small diameter part of the heat sink below the flexible element can remain within the neck of the bottle as it is substantially smaller in diameter than the inner lip diameter and will not lift or otherwise damage the lip upon release of the container when the mold is opened.

The principles of the invention can be applied to blow pins having a variety of configurations for producing container necks of various sizes and shapes. The constructions of blow molding assemblies in accordance with the invention can accordingly be tailored to individual blow molding machines and the containers to be produced in such machines.

## Claims

1. An assembly for inflating a parison and forming a neck portion of a plastic container, comprising:
first and second main mold halves for forming a reservoir cavity in which a plastic container can be formed from a parison, said main mold halves being movable between open and closed positions;
first and second top block halves mounted to the first and second main mold halves, respectively, for forming a neck portion of a plastic container;
a master seal mounted to each top block half;
a shear steel having a shearing edge mounted to each top block half;
a neck finish insert mounted to each top block half beneath the master seals and shear steels;
a blow rod extending between the top block halves and the main mold halves and vertically movable between down and up positions;
a blow pin assembly mounted to the blow rod, the blow pin assembly including a blow pin body having an upper portion, a lower portion, and a bottom end, a shearing member on the blow pin body including an annular cutting edge, the diameter of the annular cutting edge approximating the inner diameter of a passage defined by the shear steels when the top block halves are closed, the annular cutting edge of the blow pin body being positioned beneath the shearing edges of the shear steels when the blow rod is in the down position and movable past the shearing edges when moved from the down to the up position, the shear steels being arranged such that a container lip will be formed beneath the bottom surfaces of the shear steels when the main mold halves are closed and a parison is inflated, wherein 1) the length of the blow pin assembly is such that no part thereof extends to a level substantially below the bottom surfaces of the shear steels when the blow rod is in the up position and the main mold halves and top block halves are opened, or 2) the dimensions of the blow pin assembly are such that any part thereof extending beneath substantially the level of the bottom surfaces of the shear steels when the blow rod is in the up position and the main mold halves are opened is substantially smaller in diameter than the diameter of the annular cutting edge of the blow pin body, whereby contact between the container lip and blow pin assembly is substantially prevented whether the container drops straight down or is angled with respect to the blow pin body upon release.

2. An assembly as described in Claim 1 wherein the bottom end of the blow pin body is positioned substantially level with or above the bottom surfaces of the shear steels when the blow rod is in the up position.

3. An assembly as described in Claim 1 wherein the blow pin body includes a tapered portion above the annular cutting edge, the tapered portion being engageable with the master seals to align the annular cutting edge and the shearing edges of the shear steels.

4. An assembly as described in Claim 1 wherein the blow pin assembly includes a heat sink mounted within the blow pin body and extending beyond the bottom end of the blow pin body.

5. An assembly as described in Claim 4 wherein the heat sink is a substantially cylindrical aluminum sleeve.

6. An assembly as described in Claim 4 wherein the lower portion of the blow pin assembly includes a skirt, the heat sink including a substantially cylindrical portion having a first diameter and an integral second portion having a second diameter, the second diameter being larger than the first diameter, the second portion engaging an inner surface of the skirt.

7. An assembly as described in claim 1 including means mounted to said blow rod for cleaning the container lip following passage of the annular cutting edge of the blow pin body past the shear steels.

8. A method of forming a blown container, comprising:
providing a molding assembly including a first portion defining a reservoir cavity and a second portion including opposing master seals, shear steels and neck finish elements, the shear steels having bottom surfaces, a blow rod, and a blow pin assembly mounted to the blow rod and having a blow pin body including an annular cutting edge, a lower portion, and a bottom end;
inserting a parison into the molding assembly;
inflating the parison such that a container body is formed within the reservoir cavity, a container neck is formed in the second portion of the molding assembly, and a lip is formed within the container neck;
moving the blow rod upwardly such that the annular cutting edge of the blow pin assembly moves past the shear steels, thereby severing the container neck and positioning the bottom end of the blow pin body such that it is substantially level with or above the bottom surfaces of the shear steels, whereby the blow pin assembly is substantially incapable of engaging the container lip even if the container body does not drop straight down upon the opening of the molding assembly, and
opening the molding assembly to release the container body and neck.

9. A method as described in claim 8 wherein the blow pin assembly includes a heat sink extending below the bottom end of the blow pin body, including the step of moving the blow rod upwardly such that any portion of the heat sink that may extend below substantially the level of the bottom surfaces of the shear steels is substantially smaller than the diameter of the annular cutting edge of the blow pin body.

10. A method as described in claim 8 including centering the blow pin assembly as the blow rod moves upwardly by causing the blow pin assembly to engage the master seals.

11. A method as described in claim 8 wherein the blow rod is raised such that the bottom end of the blow pin body is above the bottom surfaces of the shear steels.

12. A method as described in claim 8 including the step of passing a cleaning element through the container lip following the severing of the container neck as the blow rod is moved upwardly.

13. A method of forming a blown container, comprising:
providing a molding assembly including a first portion defining a reservoir cavity and a second portion including opposing master seals, shear steels and neck finish elements, the shear steels having bottom surfaces, a blow rod, and a blow pin assembly mounted to the blow rod, the blow pin assembly including an annular cutting edge and a lower portion extending below the annular cutting edge, the lower portion including a small diameter portion having a diameter that is substantially smaller than the diameter of the annular cutting edge;
inserting a parison into the molding assembly;
inflating the parison such that a container body is formed within the reservoir cavity, a container neck is formed in the second portion of the molding assembly, and a lip is formed within the container neck;
moving the blow rod upwardly such that the annular cutting edge of the blow pin assembly moves past the shear steels, thereby severing the container neck and positioning the blow pin assembly such that no more than the small diameter portion thereof extends below substantially the level of the bottom surfaces of the shear steels, whereby the blow pin assembly is substantially incapable of engaging the container lip even if the container body does not drop straight down upon the opening of the molding assembly, and
opening the molding assembly to release the container body and neck.

14. A method as described in Claim 13 wherein the blow pin assembly includes a heat sink, the small diameter portion of the blow pin assembly comprising at least part of the heat sink.

15. A method as described in Claim 13 wherein the blow pin assembly is comprised of a blow pin body, the blow pin body including the annular cutting edge, a heat sink engaging an inner surface of the blow pin body, an end portion of the heat sink extending below the blow pin body, the end portion having a diameter substantially smaller than the diameter of the annular cutting edge and comprising the small diameter portion of the blow pin assembly, wherein at least part of the end portion of the heat sink extends below the bottom surfaces of the shear steels upon opening the molding assembly.

16. A method as described in claim 15 wherein said blow pin body is completely above the bottom surfaces of the shear steels upon opening the mold assembly.

17. A method as described in claim 13 including the step of passing a cleaning element through the container lip following the severing of the container neck as the blow rod is moved upwardly.

18. An assembly for forming the neck of a container comprising:
a blow rod;
a blow pin mounted to the blow rod, the blow pin including an annular cutting edge; and
an element mounted to the blow rod for reducing surface imperfections in the lip of a container, said element including an annular cleaning edge having a diameter approximating the diameter of the annular cutting edge of the blow pin.

19. An assembly as described in claim 18 wherein the diameter of the annular cleaning edge is slightly larger than the diameter of the annular cutting edge.

20. An assembly as described in claim 18 wherein the element is comprised of a flexible disc.
